# EUROPEAN PATENT SPECIFICATION

(11) **EP 0 683 063 B1**
(45) Date of publication and mention of the grant of the patent: **07.04.1999**
(21) Application number: 95201308.4
(22) Date of filing: 18.05.1995
(51) Int. Cl.: B60G 11/46, B60G 11/113, B60G 9/00

(54) **Axle construction for a road vehicle**
Achsenkonstruktion für ein Strassenfahrzeug
Structure d'essieu pour un véhicule routier

(30) Priority: 18.05.1994 NL 9400814
(43) Date of publication of application: 22.11.1995
(73) Proprietor: WEWELER NEDERLAND B.V., NL-7300 AC Apeldoorn (NL)
(72) Inventor: Aalderink, Derk Gert, NL-7245 NV Laren (NL)
(74) Representative: de Bruijn, Leendert C.

(56) References cited:
- GB-A- 2 068 856
- GB-A- 2 126 539
- US-A- 1 952 128
- US-A- 2 931 642
- US-A- 3 434 707
- US-A- 4 262 930
- US-A- 5 112 078

## Description

The invention relates to an axle construction for a road vehicle, comprising an axle supported by spring bellows and at least two bearing arms crossing the axle, which bearing arms are each rotatably fixed at one end to a spring carrier, the axle and each bearing arm being rigidly fixed to each other at a fixed crossing angle by means of an axle spring support and a strap plate with straps.

Such an axle construction is known, from GB-A-2126539 and is used in both smaller vehicles such as motor cars and larger vehicles such as lorries and buses. The attachment between the axle and the bearing arm must be carried out in such a way that the loads occurring in practice, for example transverse loads, can be transmitted without the occurrence of excessive deformations which have an adverse effect on the road-holding of the vehicle. In that connection it is particularly the stability of the suspension which is important as regards transverse loads.

In the case of a wheel suspension with leaf springs which are suspended from two opposite ends by means of a spring carrier and a rocker this stability is generally adequate. The transverse loads in that case are absorbed at both ends of the leaf springs, and movements in the transverse direction, which come mainly from the leaf springs themselves, remain limited.

In the case of a wheel suspension with air bellows a bearing arm which is connected at one end to a spring carrier and at the other end to an air bellows is used. Such air bellows have little stability as regards transverse loads, which means that in the case of these designs additional measures have to be taken to guarantee the transverse stability.

In practice, efforts are therefore being made to make the connection between each bearing arm and the axle so rigid that angular deformations in that connection are minimized. The framework, consisting of axle and the two bearing arms, in this case has to form such a rigid unit that transverse loads on the axle can be transmitted to the two spring carriers without parallelogram deformations occurring. In that respect, axle constructions in which the axle spring support is welded to the axle are known, but such axle constructions have the disadvantage that the weld has an adverse effect on the fatigue properties.

The object of the invention is to provide an axle construction of the abovementioned type which has better transverse stability. That object is achieved through the fact that at least one of the trap plate and the axle spring support comprises an extension piece extending in the direction of the axle and being fixed to the axle at a distance from the region where the bearing arm and the axle cross, whereby the rigidity with respect to angular deformations of the connection between said bearing arm and the axle is increased.

The construction elements which project relative to the strap plate each form a lever which relieves the connection of spring arm and axle as regards shearing loads, and which thereby has a beneficial effect on the rigidity as regards that type of load, with the result that parallelogram deformations can be prevented as much as possible.

These construction elements can be designed in various ways. For example, it is conceivable for this purpose to use separate loose elements which are fixed in a suitable manner, i.e. rigidly, to axle, bearing arm and strap plate.

The known axle construction has straps or strap bolts on either side of the arm, which straps are generally passed around the axle at one side, and at the other side are inserted into holes in the strap plate and fixed by means of nuts to the side of the strap plate facing away from the axle. According to a first possibility, such an axle construction can be designed in such a way that the strap plate has an extension piece running in the direction of the axle and fixed to said axle by means of a third strap.

However, according to an alternative embodiment the axle spring support can have an extension piece running in the direction of the axle and fixed to said axle by means of a third strap.

The third strap is passed around the axle at one side, and at the other side is inserted into holes in the extension piece and fixed by means of nuts to the side of the strap plate facing away from the axle, at the side facing the axle the extension piece being provided with an axle support which is held pressed against the axle.

Said axle support is preferably of a shape corresponding to that of the outside of the axle, in such a way that it at least partially encloses the axle in a close fit.

The strap plate can also have a second extension piece running in the direction of the bearing arm and fixed to said bearing arm. Both extension pieces are preferably made integral with the strap plate. As an alternative, the axle spring support can also have such an extension piece running in the direction of the bearing arm.

The axle spring support can also have a number of projections at the side facing the bearing arm, between which projections the bearing arm is confined in a non-rotatable manner.

When the vehicle makes rolling movements, torsional deformations occur in the axle. These torsional deformations are influenced as little as possible if the extension piece is rigid as regards deformations in the plane determined by axle and bearing arms and is relatively flexible as regards deformation arising from torsional movements of the axle.

The axle constructions described above can in particular be provided with two bearing arms in the form of leaf springs, each of which can be fixed to a vehicle chassis, at one end by means of its own rotary shaft and at the other end by means of its own air bellows.

According to an alternative embodiment, two pairs of bearing arms crossing the axle can be provided, each pair being fixed to the axle by means of a common double axle spring support and/or strap plate.

In order also to ensure uniform stress distribution in the two bearing arms of each pair when the vehicle makes a rolling movement about its longitudinal axis, the rigidity of the inside bearing arm of each pair can differ from that of the other bearing arm. This can be achieved through a difference in thickness and/or number of leaves of the bearing arm.

An exemplary embodiment of the axle construction and axle spring support according to the invention will be explained further below with reference to the appended figures.
Figure 1 shows a view in perspective of the strap plate according to the invention.
Figure 2 shows a top view of the axle construction with strap plate according to the invention.
Figure 3 shows a side view in line with the axle.
Figure 4 shows a side view in line with the spring arm.
Figure 5 shows a complete axle according to the invention.
Figure 6 shows a side view of the axle construction with axle spring support according to the invention.
Figure 7 shows a cross-section of the axle construction according to Figure 6.
Figure 8 shows a cross-section through a different axle construction.
Figure 9 shows an axle construction having a pair of bearing arms at each end.
Figure 10 shows a side view of the axle construction shown in Figure 9.
Figures 11 to 14 show alternative cross-sections of the axle construction shown in Figures 9 and 10.

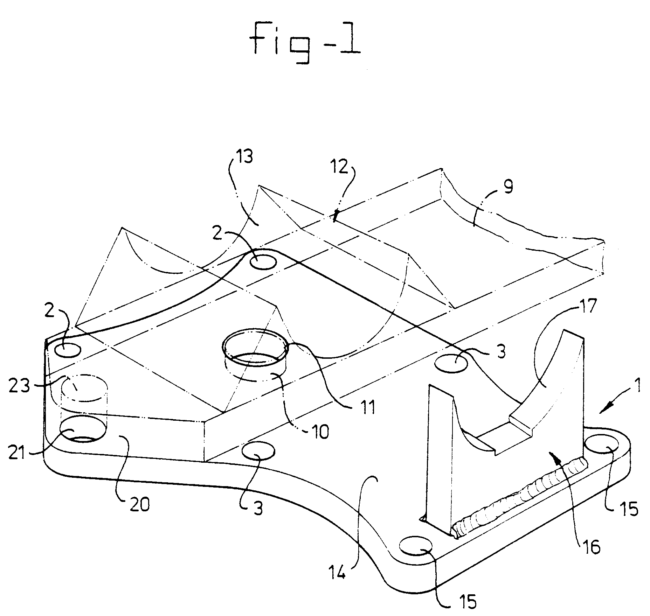

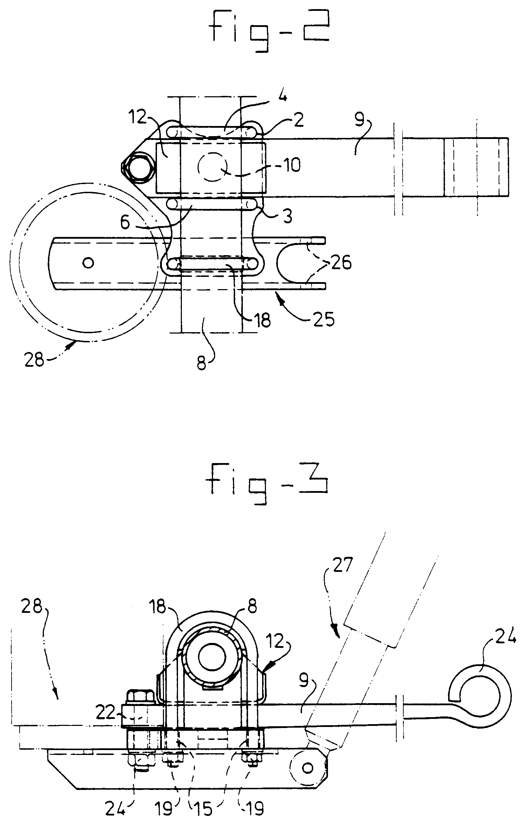

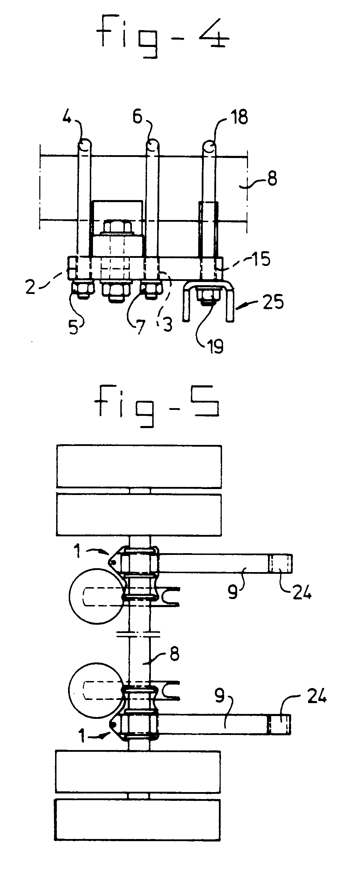

The strap plate 1 shown in Figure 1 contains in a known manner two pairs of holes 2, 3 in which a pair of straps can be fitted as shown in Figures 2 to 4. A strap 4 is fitted in the holes 2 and fixed by means of nuts 5, which are screwed onto the two threaded ends of the strap 4. A strap 6 is fixed in the holes 3 in a corresponding manner by means of nuts 7. Both straps 4 and 6 are passed around axle 8 in a known manner.

The spring arm 9, which bears a pin 10 projecting into hole 11 of the strap plate, runs between the straps 4 and 6. An axle spring support 12 is also fitted between the spring arm 9 and the axle 8, said spring support having a partially cylindrical recess 13 into which the axle 8 fits.

According to the invention, the strap plate has a first extension piece 14, which is provided with two holes 15. An axle support 16, provided with a recess 17 shaped corresponding to the periphery of the axle 8, is also welded onto the extension piece 14.

The axle 8 is clamped on the axle support 16, and thus on the strap plate 1, by means of a third strap 18 which is inserted into the holes 15 and fixed by means of nuts 19. An attachment with great angular rigidity is thus ensured between axle 8 and strap plate 1.

The strap plate 1 according to the invention also has a second extension piece 20, provided with a hole 21 into which a bolt 23 can be inserted, which bolt also runs through hole 23 in spring arm 9. Bolt 22 is fixed by means of a nut 24. Together with the pin/hole 10, 11, this bolt ensures a connection with great angular rigidity between the spring arm and the strap plate 1.

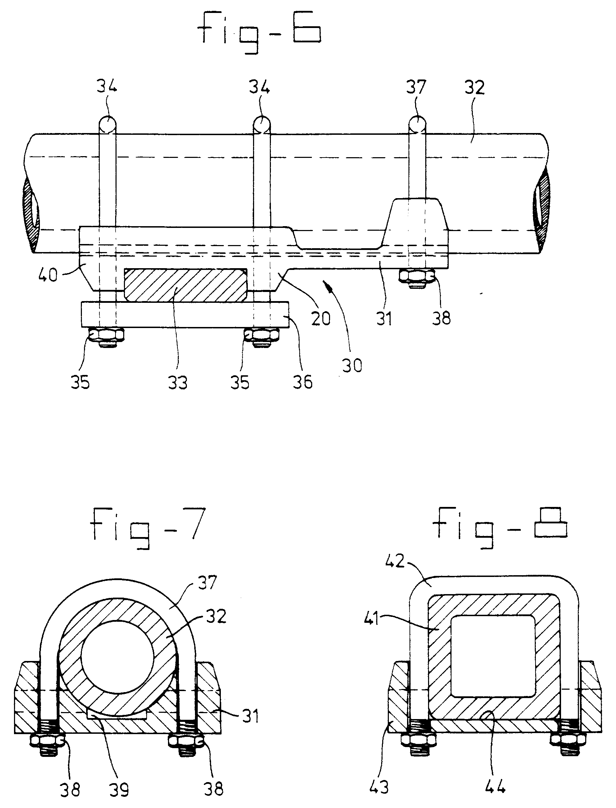

Since both the axle 8 and the spring arm 9 are now fixed to the strap plate in a manner which is very resistant to angular deflections, even if there are great transverse loads on the axle 8, virtually no angular deflection will occur between said axle 8 and the spring arms 9 disposed at two sides, as shown in Figure 5.

A load running in the axial direction of the axle and arising from a transverse load on the wheels fitted on that axle is in fact absorbed by corresponding, but opposite reaction forces at the level of the spring carrier 24 of each spring arm. Thanks to the rigid connection described above between the axle 8 and the spring arms 9, their crossing angle will remain constant, which benefits the road-holding of the vehicle.

As shown in Figures 2 to 4, an inverted U-shaped fixing arm 25 can also be fixed by means of the third strap 18 and the corresponding bolt 19. This fixing arm contains holes 26 at one side, in which holes a shaft can be fixed for the purpose of fixing the shock absorber 27.

An air spring with air bellows 28 can be fixed at the other end of this fixing arm 25. Nevertheless, the air bellows can also be fixed directly to an extended spring arm.

In the case of the variant shown in Figure 6 use is made of an axle spring support 30 which is provided with an extension piece 31. The axle spring support 30 is situated between the axle 32, on the one hand, and the spring arm 33, on the other. The assembly, consisting of axle 32, axle spring support 30 and spring arm 33, is clamped together by means of straps 34, which are fixed against the strap plate 36 by means of nuts 35.

The extension piece 31 is clamped to the axle 32 by means of a third strap 37 with nuts 38. As can also be seen in Figure 7, a recess 39 into which the axle 32 fits is provided over the full length of the axle spring support 30, thus also over the extension piece 31. The axle spring support 30 is therefore non-rotatable relative to the axle 32.

In a known manner the axle spring support 30 has four projections 40, two of which can be seen in Figure 6. The spring arm 33 is accommodated in a close fit between these projections 40, so that it is also non-rotatably retained by axle spring support 30. As an alternative, the axle spring support can be connected to the spring arm 35 by the pin/hole construction shown in Figure 1, instead of by the projections 40.

The extension piece 31 is of lower thickness than the remainder of axle spring support 30, in such a way that torsional deformations of the axle 32 remain possible. Nevertheless, the axle spring support is sufficiently rigid to counteract angular deflections between bearing arm 33 and axle 32.

Figure 8 shows that, instead of the round axle 32 of the embodiment of Figures 6 and 7, a square axle 41 can also be used. Modified straps 42 are used in this case. Instead of such straps 42, strap bolts can also be used, which bolts are inserted into the second strap plate 43 at one side and into a strap plate lying on the axle at the other side.

The strap plate 43 has a recess 44 which is adapted to the shape of the axle 41, so that the latter can also be retained in such a way that it cannot rotate relative to the axle spring support 43.

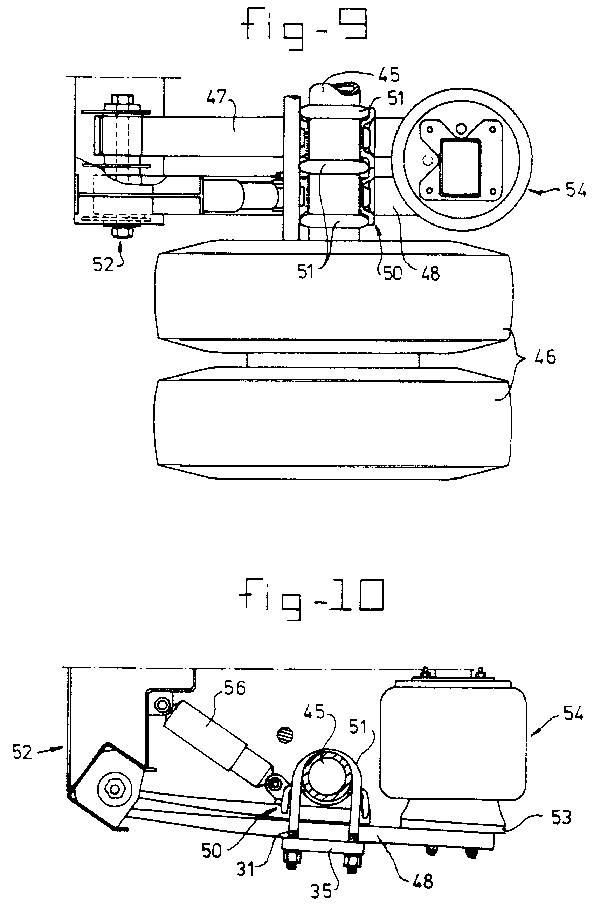

The axle construction shown in Figures 9 and 10 comprises an axle 45, on which wheels 46 are fitted at both ends. Provision is also made near each end for two bearing arms 47, 48, which are fixed to axle 45 by means of axle spring support construction 50 and straps 51.

At their one end the bearing arms 47, 48 are rotatably fixed to spring carrier 52; at their other end both bearing arms 47, 48 are connected by means of fitting element 53 to the air bellows indicated in its entirety by 54. The straps 51 interact with strap plate 55.

The fitting element 53, complementing the axle spring support 50, forms a rigid connection between the two bearing arms 47, 48, thus further counteracting parallelogram deformations.

Instead of the plate shown in Figure 9, a spacer sleeve can be provided between the two bearing arms 47, 48, at the level of the spring carrier 52.

A shock absorber 56 is provided in a known manner between axle spring support construction 50 and spring carrier 52.

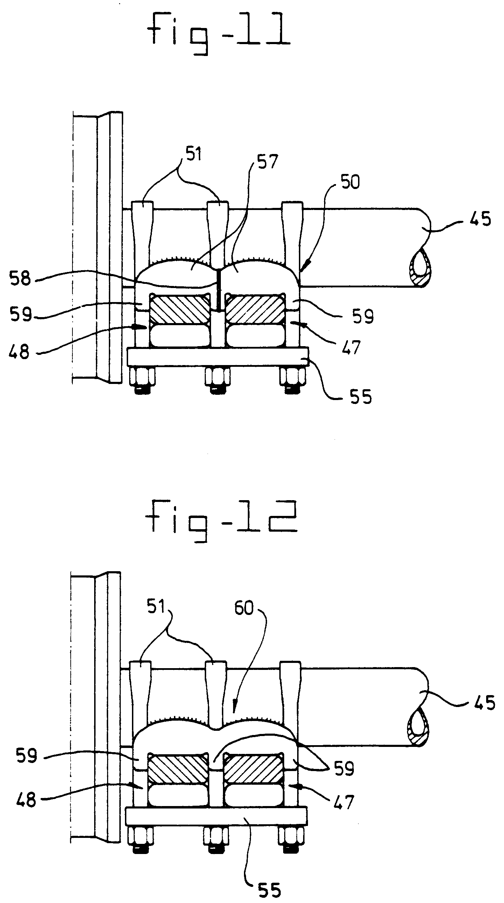

In the embodiment of Figure 11 it can be seen that the spring carrier construction can comprise two spring carrier parts 57 which are welded firmly to each other by means of weld 58. The two spring carrier parts 57 have projections 59, between which the bearing arms 47, 48 respectively are nonrotatably accommodated.

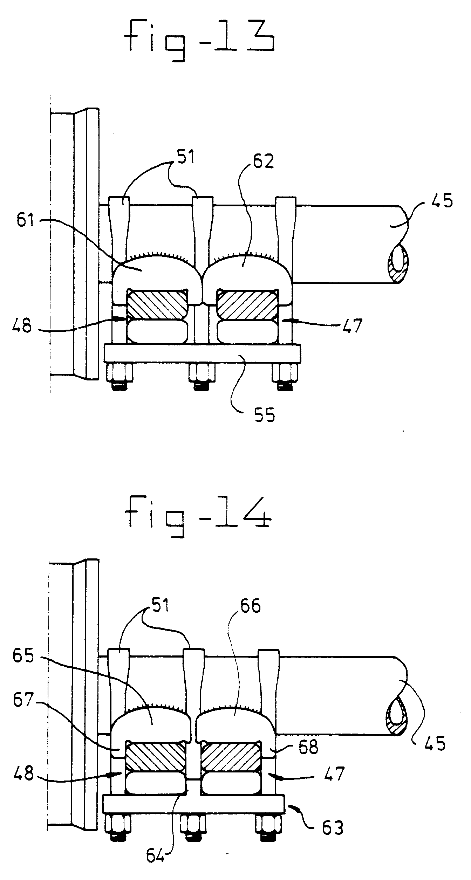

A spring carrier construction 60 in one piece can be seen in the embodiment of Figure 12. This spring carrier construction 60 also has projections 59, between which the bearing arms 47, 48 are non-rotatably accommodated.

Figure 13 shows a variant with a spring carrier construction comprising two separate spring carrier parts 61, 62.

Finally, Figure 14 shows a variant in which a strap plate 63 which has a projection 64 situated between the bearing arms 47, 48 is provided. In addition, two spring carrier parts 65, 66 which have projections 67, 68 at their ends facing away from each other are provided.

The two bearing arms 47, 48 are non-rotatably clamped between projection 64 of strap plate 63 and projections 67, 68 of spring carriers 65, 66.

It is pointed out that in all these variants the spring carrier construction can also be welded firmly to the axle 45.

## Claims

1. Axle construction for a road vehicle, comprising an axle (8, 20, 32, 45) supported by spring bellows (28, 54) and at least two bearing arms (9, 33, 47, 48) crossing the axle, which bearing arms are each rotatably fixed at one end to a spring carrier (52), the axle and each bearing arm being rigidly fixed to each other at a fixed crossing angle by means of an axle spring support (12, 30, 50) and a strap plate (1, 36, 55, 63) with a pair of straps (4, 6, 35, 51),
characterized in that at least one of the strap plate (1, 55) and the axle spring support (30) comprises an extension piece (14, 31) extending in the direction of the axle (8, 45) and being fixed to the axle (8, 32, 45) at a distance from the region where the bearing arm (9, 33, 47, 48) and the axle (18, 32, 45) cross, whereby the rigidity with respect to angular deformations of the connection between said bearing arm and the axle is increased.

2. Axle construction according to Claim 1, in which the strap plate (1, 55) has an extension piece (14) running in the direction of the axle (8, 45) and fixed to said axle by means of a third strap (18).

3. Axle construction according to Claim 1 or 2, in which the axle spring support (30) has an extension piece (31) running in the direction of the axle (32) and fixed to said axle (32) by means of a third strap (37).

4. Axle construction according to Claim 2 or 3, in which the third strap (18, 37) passed around the axle (8, 32, 45) at one side, and at the other side is inserted into holes (15) in the extension piece and fixed by means of nuts (19) to the side of the extension piece facing away from the axle.

5. Axle construction according to Claim 4, in which at the side facing the axle (8) the extension piece (14) is provided with an axle support (16) which is held pressed against the axle (8).

6. Axle construction according to Claim 5, in which the axle support (16) is of a shape corresponding to that of the outside of the axle (8) in such a way that it at least partially encloses the axle (8) in a close fit.

7. Axle construction according to one of Claims 2 - 6, in which the extension piece (31) is rigid as regards deformations in the plane determined by axle (32) and bearing arms (33) and is relatively flexible as regards deformation arising from torsional movements of the axle (32).

8. Axle construction according to Claim 7, in which a thickness and/or a width measurement of the extension piece (31) is smaller than a corresponding measurement of the strap plate or axle spring support (30).

9. Axle construction according to one of Claims 2 - 8, in which the strap plate (1) and/or the axle spring support has a second extension piece (20) running in the direction of the bearing arm (9) and fixed to said bearing arm (9).

10. Axle construction according to Claim 9, in which the second extension piece (20) has a pin or bolt (23) which faces the bearing arm (9) and projects into a correspondingly shaped hole in the bearing arm (9).

11. Axle construction according to Claim 9 or 10, in which strap plate (1) and extension pieces (14, 20) are integral.

12. Axle construction according to one of Claims 2 - 11, in which the axle spring support (12, 30, 50) has a number of projections (57) on the side facing the bearing arm (9, 33, 47, 48) between which projections the bearing arm is confined in a non-rotatable manner.

13. Axle construction according to one of the preceding claims, in which two pairs of bearing arms (47, 48) crossing the axle (45) are provided, each pair of which can be fixed to the axle (45) by means of a common double axle spring support (57, 60) and/or strap plate.

14. Axle construction according to Claim 13, in which a double axle spring support (60) in one piece is provided for each pair of bearing arms (47, 48).

15. Axle construction according to Claim 13 or 14, in which a double strap plate (55) in one piece is provided for each pair of bearing arms (47, 48).

16. Axle construction according to Claim 15, in which each double strap plate (55) is fixed by means of three straps.

17. Axle construction according to Claim 13, 14, 15 or 16, in which each axle spring support (57, 60) and/or strap plate has projections (59) between which the bearing arms (47, 48) are confined in a non-rotatable manner.

18. Axle construction according to one of Claims 13 - 17, in which the rigidity of the inside bearing arm of each pair differs from that of the other bearing arm.

## Patentansprüche

1. Achskonstruktion für ein Straßenfahrzeug, mit einer Achse (8, 20, 32, 45), die durch Federbälge (28, 54) und wenigstens zwei die Achse kreuzende Lagerarme (9, 33, 47, 48) gehaltert ist, die jeweils an einem Ende an einem Federträger (52) drehbar befestigt sind, wobei die Achse und jeder Lagerarm mittels einer Achsfederhalterung (12, 30, 50) und einer Bügelplatte (1, 36, 55, 63) mit einem Paar Bügel (4, 6, 35, 51) in einem feststehenden Kreuzungswinkel starr aneinander befestigt sind,
dadurch gekennzeichnet,
daß die Bügelplatte (1, 55) und/oder die Achsfederhalterung (30) ein verlängerungsstück (14, 31) aufweist, das sich in Richtung der Achse (8, 45) erstreckt und in einer Distanz von dem Bereich, in dem sich der Lagerarm (9, 33, 47, 48) und die Achse (18, 32, 45) kreuzen, an der Achse befestigt ist, so daß die Steifigkeit hinsichtlich winkelmäßiger Verformungen der Verbindung zwischen dem Lagerarm und der Achse gesteigert ist.

2. Achskonstruktion nach Anspruch 1,
wobei die Bügelplatte (1, 55) ein Verlängerungsstück (14) aufweist, das sich in Richtung der Achse (8, 45) erstreckt und mittels eines dritten Bügels (18) an der Achse befestigt ist.

3. Achskonstruktion nach Anspruch 1 oder 2,
wobei die Achsfederhalterung (30) ein Verlängerungsstück (31) aufweist, das sich in Richtung der Achse (32) erstreckt und an der Achse (32) mittels eines dritten Bügels (37) befestigt ist.

4. Achskonstruktion nach Anspruch 2 oder 3,
wobei der dritte Bügel (18, 37) auf der einen Seite um die Achse (8, 32, 45) herumgeführt ist und auf der anderen Seite in Öffnungen (15) in das Verlängerungsstück eingeführt ist und mittels Muttern (19) an der von der Achse wegweisenden Seite des Verlängerungsstücks befestigt ist.

5. Achskonstruktion nach Anspruch 4,
wobei das Verlängerungsstück (14) auf der der Achse (8) zugewandten Seite mit einer Achshalterung (16) versehen ist, die gegen die Achse (8) gedrückt gehalten ist.

6. Achskonstruktion nach Anspruch 5,
wobei die Achshalterung (16) eine Formgebung aufweist, die der der Außenseite der Achse (8) entspricht, so daß sie die Achse (8) wenigstens zum Teil in einem engen Sitz umschließt.

7. Achskonstruktion nach einem der Ansprüche 2 bis 6, wobei das verlängerungsstück (31) im Hinblick auf Verformungen in der durch die Achse (32) und die Lagerarme (33) definierten Ebene starr ist und im Hinblick auf Verformung auf Grund von Torsionsbewegungen der Achse (32) relativ flexibel ist.

8. Achskonstruktion nach Anspruch 7,
wobei eine Abmessung der Dicke und/oder Breite des Verlängerungsstücks (31) kleiner ist als eine entsprechende Abmessung der Bügelplatte oder der Achsfederhalterung (30).

9. Achskonstruktion nach einem der Ansprüche 2 bis 8, wobei die Bügelplatte (1) und/oder die Achsfederhalterung ein zweites Verlängerungsstück (20) aufweist, das sich in Richtung des Lagerarms (9) erstreckt und an dem Lagerarm (9) befestigt ist.

10. Achskonstruktion nach Anspruch 9,
wobei das zweite Verlängerungsstück (20) einen Stift oder Bolzen (23) aufweist, der dem Lagerarm (9) zugewandt ist und in eine entsprechend geformte Öffnung in dem Lagerarm (9) hineinragt.

11. Achskonstruktion nach Anspruch 9 oder 10,
wobei die Bügelplatte (1) und die Verlängerungsstücke (14, 20) in integraler Weise ausgebildet sind.

12. Achskonstruktion nach einem der Ansprüche 2 bis 11, wobei die Achsfederhalterung (12, 30, 50) eine Anzahl von Vorsprüngen (57) auf der dem Lagerarm (9, 33, 47, 40) zugewandten Seite aufweist, wobei zwischen den Vorsprüngen der Lagerarm in nicht -drehbarer Weise eingeschlossen ist.

13. Achskonstruktion nach einem der vorausgehenden Ansprüche,
wobei zwei Paare von die Achse (45) kreuzenden Lagerarmen (47, 48) vorgesehen sind, von denen jedes Paar mittels einer gemeinsamen Doppel-Achsfederhalterung (57, 60) und/oder -Bügelplatte an der Achse (45) befestigt werden kann.

14. Achskonstruktion nach Anspruch 13,
wobei eine Doppel-Achsfederhalterung (60) in einem Stück für jedes Paar von Lagerarmen (47, 48) vorgesehen ist.

15. Achskonstruktion nach Anspruch 13 oder 14,
wobei eine Doppel-Bügelplatte (53) in einem Stück für jedes Paar von Lagerarmen (47, 48) vorgesehen ist.

16. Achskonstruktion nach Anspruch 15,
wobei jede Doppel-Bügelplatte (55) mittels drei Bügeln befestigt ist.

17. Achskonstruktion nach Anspruch 13, 14, 15 oder 16, wobei jede Achsfederhalterung (57, 60) und/oder Bügelplatte Vorsprünge (59) aufweist, zwischen denen die Lagerarme (47, 48) in nicht-drehbarer Weise eingeschlossen sind.

18. Achskonstruktion nach einem der Ansprüche 13 bis 17, wobei die Steifigkeit des innenliegenden Lagerarms jedes Lagerarmpaares von der des anderen Lagerarms verschieden ist.

## Revendications

1. Construction d'essieu de véhicule routier, comprenant un essieu (8, 20, 32, 45) supporté par un soufflet élastique (28, 54) et au moins deux bras de support (9, 33, 47, 48) recoupant l'essieu, les bras de support étant chacun fixés en rotation à une première extrémité sur un support de ressort (52), l'essieu et chaque bras de support étant fixés rigidement l'un à l'autre avec un angle fixe de recoupement à l'aide d'un support de ressort d'essieu (12, 30, 50) et d'une plaque à colliers (1, 36, 55, 63) ayant une paire de colliers (4, 6, 35, 51),
caractérisée en ce que la plaque à colliers (1, 55) ou le support de ressort d'essieu (30) au moins comporte une pièce de prolongement (14, 31) qui s'étend dans la direction de l'essieu (8, 45) et qui est fixée à l'essieu (8, 32, 45) à distance de la région de recoupement du bras de support (9, 33, 47, 48) et de l'essieu (18, 32, 45), si bien que la rigidité en présence de déformations angulaires du raccordement formé entre le bras de support et l'essieu est accrue.

2. Construction d'essieu selon la revendication 1, dans laquelle la plaque à colliers (1, 55) a une pièce de prolongement (14) disposée dans la direction de l'essieu (8, 45) et fixée à l'essieu par un troisième collier (18).

3. Construction d'essieu selon la revendication 1 ou 2, dans laquelle le support (30) de ressort d'essieu a une pièce de prolongement (31) qui s'étend dans la direction de l'essieu (32) et qui est fixée à l'essieu (32) par un troisième collier (37).

4. Construction d'essieu selon la revendication 2 ou 3, dans laquelle le troisième collier (18, 37) passe autour de l'essieu (8, 32, 45) d'un côté et, de l'autre côté, pénètre dans des trous (15) de la pièce de prolongement et est fixé par des écrous (19) du côté de la pièce de prolongement tourné du côté opposé à l'essieu.

5. Construction d'essieu selon la revendication 4, dans laquelle, du côté tourné vers l'essieu (8), la pièce de prolongement (14) a un support d'essieu (16) qui est maintenu en compression contre l'essieu (8).

6. Construction d'essieu selon la revendication 5, dans lequel le support d'essieu (16) a une forme qui correspond à celle de l'extérieur de l'essieu (8), d'une manière telle qu'il entoure au moins partiellement l'essieu (8) de façon intimement ajustée.

7. Construction d'essieu selon l'une des revendications 2 à 6, dans lequel la pièce de prolongement (31) est fixée rigidement pour résister aux déformations dans le plan déterminé par l'essieu (32) et les bras de support (33), et est relativement flexible en présence de déformations dues à des mouvements de torsion de l'essieu (32).

8. Construction d'essieu selon la revendication 7, dans laquelle une mesure d'épaisseur et/ou de largeur de la pièce de prolongement (31) est inférieure à une mesure correspondante de la plaque à colliers ou du support de ressort d'essieu (30).

9. Construction d'essieu selon l'une des revendications 2 à 8, dans laquelle la plaque à colliers (1) et/ou le support de ressort d'essieu a une seconde pièce de prolongement (20) disposée dans la direction du bras de support (9) et fixée au bras de support (9).

10. Construction d'essieu selon la revendication 9, dans laquelle la seconde pièce de prolongement (20) a une broche ou un boulon (23) tourné vers le bras de support (9) et dépassant dans un trou de forme correspondante réalisé dans le bras de support (9).

11. Construction d'essieu selon la revendication 9 ou 10, dans laquelle la plaque à colliers (1) et les pièces de prolongement (14, 20) sont en une seule pièce.

12. Construction d'essieu selon l'une des revendications 2 à 11, dans laquelle le support de ressort d'essieu (12, 30, 50) a un certain nombre de saillies (57) du côté tourné vers le bras de support (9, 33, 47, 48), le bras de support étant maintenu entre les saillies afin qu'il ne puisse pas tourner.

13. Construction d'essieu selon l'une des revendications précédentes, dans laquelle deux paires de bras de support (47, 48) qui recoupent l'essieu (45) sont incorporées, chaque paire pouvant être fixée à l'essieu (45) par un support de ressort d'essieu (57, 60) et/ou une plaque à colliers doubles communs.

14. Construction d'essieu selon la revendication 13, dans laquelle le support de ressort d'essieu (60) qui est double en une seule pièce est formé pour chaque paire de bras de support (47, 48).

15. Construction d'essieu selon la revendication 13 ou 14, dans laquelle une plaque double à colliers (55) en une seule pièce est formée pour chaque paire de bras de supports (47, 48).

16. Construction d'essieu selon la revendication 15, dans laquelle chaque plaque double à colliers (55) est fixée par trois colliers.

17. Construction d'essieu selon la revendication 13, 14, 15 ou 16, dans laquelle chaque support de ressort d'essieu (57, 60) et/ou plaque à colliers a des saillies (59) entre lesquelles sont retenus les bras de support (47, 48) afin qu'ils ne puissent pas tourner.

18. Construction d'essieu selon l'une des revendications 13 à 17, dans laquelle la rigidité du bras interne de palier de chaque paire diffère de celle de l'autre bras de support.
